# EUROPÄISCHE PATENTANMELDUNG

(11) **EP 4 503 593 A1**
(43) Veröffentlichungstag der Anmeldung: **05.02.2025**
(21) Anmeldenummer: 23189283.7
(22) Anmeldetag: 02.08.2023
(51) Int. Cl.: H04N 5/33, H04N 25/20, H04N 25/443, H04N 25/77, F41G 7/22, G01S 7/495, G01S 17/66, H04N 25/46

(54) **FOCAL PLANE ARRAY**

(71) Anmelder: HENSOLDT Sensors GmbH, 82024 Taufkirchen (DE)
(72) Erfinder: ASSEL, Michael, 86438 Kissing (DE); THUM-JÄGER, Andrea, 85640 Putzbrunn (DE)
(74) Vertreter: LifeTech IP Spies & Behrndt Patentanwälte PartG mbB

(57) **Zusammenfassung**

Ein Focal Plane Array für einen Detektor ist ausgebildet, um umzuschalten zwischen einem integrierenden Modus, in dem das Focal Plane Array ausgebildet ist, um Licht über eine Integrationszeit hinweg zu empfangen und nach Ablauf der Integrationszeit in ein elektrisches Signal umzuwandeln, und einem Pulsmodus, in dem das Focal Plane Array ausgebildet ist, um Licht zu empfangen und direkt, nicht erst nach Ablauf der Integrationszeit, in ein elektrisches Signal umzuwandeln.

## Beschreibung

Die vorliegende Erfindung bezieht sich auf ein Focal Plane Array für einen Detektor, ein System für gerichtete Infrarot- oder optische Gegenmaßnahmen, ein Verfahren zu einem Betreiben des Focal Plane Array und insbesondere auf einen Detektor mit einer Kombination einer integrierenden und einer pulsdetektierenden Funktion bzw. ein Hybrid Focal Plane Array für optische Gegenmaßnahmen.

### HINTERGRUND DER ERFINDUNG

Im Bereich des Selbstschutzes von militärischen und zivilen Fahrzeugen vor Beschuss mit gelenkten wie auch ungelenkten Flugkörpern werden Systeme eingesetzt, die aus Sensoren zur Detektion des bedrohenden Flugkörpers sowie den sogenannten Gegenmaßnahmen bestehen.

Wird durch den Sensor bzw. Detektor ein Zielobjekt, insbesondere ein anfliegender Flugkörper, erkannt, so wird dies an ein übergeordnetes Selbstschutzsystem und einen Piloten oder Fahrer gemeldet. Entweder erfolgt die Einleitung der Gegenmaßnahme automatisch durch ein Selbstschutzsystem, oder sie wird manuell durch einen Benutzer, etwa den Piloten oder Fahrer, ausgelöst. Als Gegenmaßnahmen stehen dabei eine Vielzahl von Möglichkeiten zur Verfügung. Im Bereich der Landfahrzeuge sind dies im Allgemeinen Täuschnebel oder aktive Geräte zum Stören einer Lenkeinheit des Flugkörpers. Im Bereich der Flugzeuge werden dagegen sogenannte Täuschkörper (Chaffs und Flares) verwendet, die dem Flugkörper Falschziele vorgaukeln und damit deren Hochfrequenz- oder Infrarotsuchkopf (radio frequency, RF, bzw. infrared, IR, seeker head) veranlassen, dieses Scheinziel anstelle des eigenen Luftfahrzeugs anzusteuern und zu bekämpfen.

Eine jüngere Entwicklung zur Bekämpfung von IR-Suchkopf-gelenkten Flugkörpern stellen die Systeme gerichteter infraroter Gegenmaßnahmen (directed infrared countermeasures, DIRCM) oder allgemein gerichteter optischer Gegenmaßnahmen (directed optical countermeasures, DOCM) dar. Bei diesen Systemen wird durch ein spezielles Licht- bzw. Störsignal der Suchkopf des Flugkörpers so irritiert, dass er nicht mehr in der Lage ist, das eigentliche Ziel weiter zu verfolgen. DIRCM-Systeme bestehen meist aus einem Lasergerät, einem Richtsystem und einer Sensorik zum Verfolgen des Flugkörpers. Das Lasergerät erzeugt einen Laserstrahl, der mit Hilfe des Richtsystems auf das Zielobjekt bzw. den Flugkörper gerichtet wird und das Störsignal überträgt. Eine zeitliche Signatur des Störsignals (Störcode bzw. jam code, JC) ist dabei auf einzelne Flugkörpertypen abgestimmt. Der Störcode muss eine gewisse Zeitdauer auf den Suchkopf einwirken, um den gewünschten Effekt zu erzielen.

Da im Allgemeinen nicht bekannt ist, welcher Flugkörper im Anflug ist, muss im Einsatzszenario ein Störcode zusammengesetzt werden, der aus den Einzelstörcodes der zu erwartenden Flugkörper in einer zeitlichen Abfolge zusammengesetzt ist. Hieraus ergeben sich bereits zwei Nachteile dieser herkömmlichen sogenannten Open Loop DIRCM. Zum einen kann es sein, dass der gerade anfliegende Flugkörper erst durch einen zeitlich am Ende einer solchen Abfolge liegenden Störcode bekämpft werden kann und somit Zeit, beispielsweise für die Bekämpfung weiterer Flugkörper, verloren geht. Zum anderen besteht die Möglichkeit, dass der Störcode für das konkrete Zielobjekt gar nicht im zusammengesetzten Störcode enthalten ist. Damit ist die Wirkung eingeschränkt oder im schlimmsten Fall gar nicht vorhanden.

Neben den Open Loop DIRCM sind im Stand der Technik sogenannte Closed Loop DIRCM bekannt. Diese werten einen gepulsten, meist auch zeitlich modulierten und am Suchkopf reflektierten Laserstrahl aus und klassifizieren damit einen Typ des anfliegenden Flugkörpers. Ist der Typ des Flugkörpers klassifiziert, kann umgehend der passende Störcode abgespielt werden. Somit ist eine Bekämpfung des Flugkörpers schneller möglich.

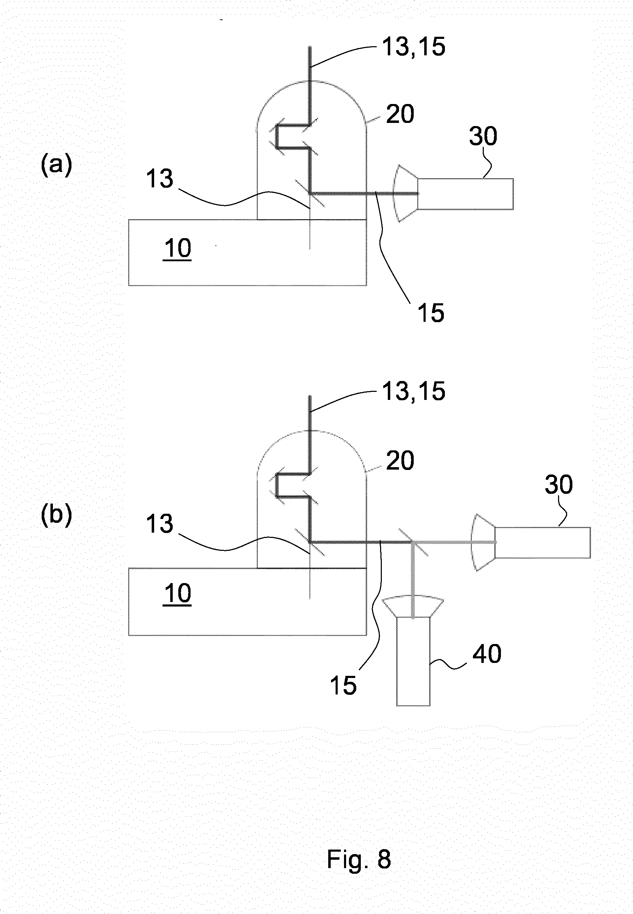

**Fig. 8** zeigt einen schematischen Aufbau eines herkömmlichen Open Loop DIRCM (im Teil (a) der Figur) und eines herkömmlichen Closed Loop DIRCM (im Teil (b) der Figur). Beiden gemeinsam ist die Lichtquelle, i.A. ein Lasergerät 10, das einen Laserstrahl 13 im spektralen Bereich, in dem auch die Suchköpfe arbeiten, erzeugt. Weiter weisen beide Systeme ein Richtsystem 20 auf, das den Laserstrahl 13 gezielt auf den Suchkopf ausrichtet, und einen Verfolgungssensor (Tracking Sensor) 30, meist ein optisches Kamerasystem, das für ein Erfassen und Verfolgen des Flugkörpers und auch für die korrekte Ausrichtung des Richtsystems 20 verantwortlich zeichnet. Im Falle des Closed Loop DIRCM kommt noch ein weiterer Detektor (Closed-Loop-Detektor) 40 hinzu, der das rückreflektierte, modulierte bzw. gepulste Lichtsignal im reflektierten Laserstrahl 15 mit einer hohen Zeitauflösung aufnimmt. Da das zu analysierende Lichtsignal sehr schwach ist, muss der Closed-Loop-Detektor eine hohe Empfindlichkeit besitzen. Beide Detektoren 30, 40 arbeiten im Allgemeinen im gleichen Spektralbereich, was dazu führt, dass das einfallende Licht auf beide Detektoren 30, 40 aufgeteilt werden muss und somit im jeweiligen Kanal abgeschwächt wird, womit die Detektion weiter erschwert bzw. die Reichweite reduziert wird.

Die Sichtlinien aller drei optischen Komponenten 10, 30, 40 müssen für die korrekte Funktion des DIRCM mit einer hohen Genauigkeit korrekt aufeinander ausgerichtet sein. Diese Ausrichtung ist in allen Umweltbedingungen aufrechtzuerhalten. Da das Sichtfeld des Closed-Loop-Detektors nur etwa der Divergenz des Laserstrahls 13 entspricht, ist hierbei eine sehr hohe Präzision notwendig, die ebenfalls unter allen äußeren Einflüssen eingehalten werden muss.

Wichtige Unterschiede zwischen dem Tracking Sensor 30 und dem Closed-Loop-Detektor 40 bestehen in den Sichtfeldern sowie in den zeitlichen und räumlichen Auflösungen dieser Detektoren. Während der Tracking Sensor 30 ein relativ zum Closed-Loop-Detektor 40 größeres Sichtfeld besitzt, um bei der Übergabe der Bedrohung etwa von einem Flugkörperwarner zum DIRCM sicherzustellen, dass der Flugkörper dort auch erfasst werden kann, ist für den Closed-Loop-Detektor 40 nur ein Sichtfeld notwendig, das der Divergenz des Laserstrahls entspricht, da der Closed-Loop-Detektor 40 den zurückreflektierten Laserstrahl 15 empfangen soll. Die Ortsauflösung des Tracking Sensor 30 liegt deutlich über der des Closed-Loop-Detektor 40, da die Ausrichtung des Laserstrahls 13 auf den Flugkörper auf Basis von Daten des Tracking Sensor 30 erfolgt, während der Closed-Loop-Detektor 40 keine hohe räumliche Auflösung benötigt. Die zeitliche Auflösung der beiden Detektoren 30, 40 unterscheidet sich darin, dass der Tracking Sensor 30 die Verfolgung des Flugkörpers sicherstellen muss und damit die Relativbewegungen des Flugkörpers sowie die Eigenbewegung des eigenen Trägers ausgleichen muss. Die dazu notwendige Bildwiederholrate ist relativ gering. Der Closed-Loop-Detektor 40 hingegen benötigt eine höhere Zeitauflösung, um die zeitlichen Charakteristika des vom Flugkörper zurückgeworfenen Lichts analysieren zu können. Im Allgemeinen wird im DIRCM ein Kurzpulslaser 10 verwendet. Der Closed-Loop-Detektor 40 ist so abgestimmt, dass er in der Lage ist, einzelne Laserpulse zeitlich aufzulösen, der sich langsamer verändernde Hintergrund aber herausgefiltert wird.

Die hier genannten Detektoren 30, 40 umfassen üblicherweise ein Focal Plane Array (Detektor 30) und eine schnelle Photodiode (Detektor 40). Ein Focal Plane Array umfasst eine in der Regel zweidimensionale Anordnung (Matrix) aus Pixeln. Die Pixel sind jeweils Sensoren für Licht, insbesondere in einem infraroten oder in einem optischen (für das menschliche Auge wahrnehmbaren) Bereich. Das Focal Plane Array ist dabei jeweils in der Regel in einer Brennebene der Optik angeordnet.

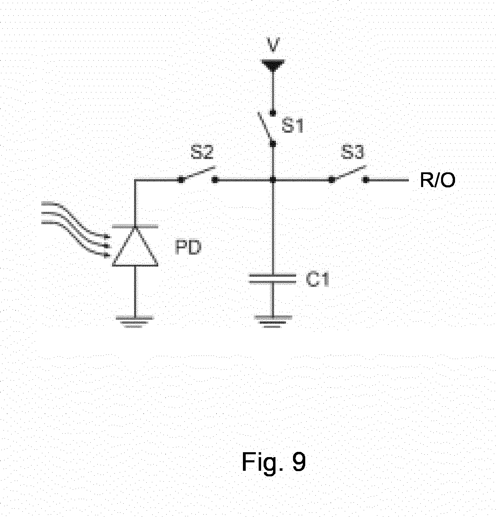

**Fig. 9** zeigt einen (vereinfachten) bekannten Ausleseschaltkreis eines Pixels eines Focal Plane Array, insbesondere eines sogenannten 3T-Pixels. Der Ausleseschaltkreis stellt einen analogen Teil der Signalverarbeitung bereit, an den sich in der Regel ein digitaler Teil anschließt. Der Ausleseschaltkreis umfasst drei Transistoren bzw. Schalter S1, S2, S3 und ist zum Auslesen einer Photodiode PD des 3T-Pixels ausgebildet. Durch Bestrahlung mit Licht werden an der Photodiode PD elektrische Ladungsträger (Elektronen) erzeugt und bei geschlossenem Schalter S2 der Kondensator C1 entladen. Dies entspricht dem Belichten. Zum Ende der Belichtungszeit wird der Schalter S2 geöffnet. Ein Pixelsignal, das der eingefallenen Lichtintensität entspricht, liegt nun in Form einer Ladung und damit auch einer Spannung U am Kondensator C1 an. Durch Schließen des Schalters S3 kann das Pixel zum Auslesen ausgewählt werden und der Spannungswert, der an C1 anliegt, ausgelesen werden. Nach der Beendigung des Auslesens wird der Resetschalter S1 geschlossen (S2 und S3 geöffnet) und der Kondensator wieder geladen. Dadurch wird der Bildinhalt gelöscht und nach Öffnen des Schalters S1 und Schließen des Schalters S2 kann eine neue Bildaufzeichnung starten. Da die Intensitätsinformation so lange aufgesammelt wird, wie der Schalter S2 geschlossen ist, werden diese Pixel auch als integrierende Pixel bezeichnet. Die Zeitdauer, in welcher der Schalter S2 geschlossen ist (Integrationszeit), entspricht der Belichtungsdauer klassischer Kameras.

Eine solche Pixelschaltung wird in Focal Plane Arrays zur Bildaufzeichnung eingesetzt. In einem herkömmlichen DIRCM kann der als Tracking Sensor 30 verwendete Detektor eine Pixelschaltung dieses Typs aufweisen.

Für die Detektion von sehr schnellen Ereignissen (z. B. Detektion von Laserpulsen eines Kurzpulslasers) eignet sich diese Pixelschaltung jedoch nicht, da aufgrund der langen Integrationszeit neben den kurzen Pulsen zusätzlich über einen langen Zeitraum der Hintergrund aufgezeichnet wird, der die Pulse verdecken kann. Für die Detektion solcher Signale eignen sich daher sogenannte AC-gekoppelte Photodioden, deren Signal nur dann weitergegeben wird, wenn die Eingangssignale zu einem erwünschten hohen Frequenzspektrum des Detektors passen, während der kontinuierliche bzw. langsam veränderliche Hintergrund nicht zum Signal beiträgt. Ein solcher Detektor kommt in einem Closed Loop DIRCM als Closed-Loop-Detektor 40 zum Einsatz. Dort werden die zurückkommenden kurzen Laserpulse detektiert. Die zeitliche Intensitätsverteilung der zurückkommenden Laserpulse ist dann charakteristisch für den jeweiligen Suchkopf und dient zu dessen Klassifikation.

Realisiert wird diese AC-Kopplung beispielsweise über einen Filter im Pixelschaltkreis, der als Hochpassfilter oder Bandpass ausgeführt sein kann. So werden alle statischen Signale und Signalvariationen unterhalb einer Grenzfrequenz ausgefiltert. Im Falle des Bandpassfilters werden neben den niederfrequenten auch die höherfrequenten Anteile ausgefiltert.

Im Stand der Technik ist es zudem bekannt, den Tracking Sensor auch als Closed-Loop-Detektor einzusetzen. Ein Beispiel für ein solches System ist in der Patentschrift US 6,369,885 B1 offenbart. Der Tracking Sensor weist in der Brennebene ein Focal Plane Array auf, in der eine sogenannte "Region of Interest" definiert werden kann. Wenn der Tracking Sensor als Closed-Loop-Detektor arbeitet, wird nur dieser interessierende Bereich des Focal Plane Array ausgelesen. Da die Ausleserate konstant, die Anzahl der auszulesenden Pixel in diesem Modus aber deutlich reduziert ist, kann die Bildwiederholrate ansteigen. Begrenzt wird sie nur durch eine Reset-Zeit, die zum Löschen des Bildinhalts aus dem vorherigen Bild notwendig ist, und durch eine Integrationszeit, während welcher der Sensor lichtempfindlich ist. Letztere entspricht der Verschlusszeit einer normalen Kamera. Durch diese Methode sind im Idealfall so hohe Bildwiederholraten zu erreichen, dass diese für die Auswertung des vom Zielobjekt zurückgestreuten Signals ausreichend sind. Die notwendigen Bildwiederholraten sind abhängig von den zu klassifizierenden Suchköpfen.

Insgesamt besteht jedoch weiterhin ein Bedarf nach einem effizient arbeitenden System geführter optischer Gegenmaßnahmen, das in der Lage ist, einen Störcode möglichst schnell an ein Zielobjekt anzupassen.

### KURZBESCHREIBUNG DER ERFINDUNG

Dieses Ziel wird zumindest teilweise durch ein Focal Plane Array nach Anspruch 1 und ein System für gerichtete Infrarot-Gegenmaßnahmen, DIRCM, nach Anspruch 10 bzw. ein System für gerichtete optische Gegenmaßnahmen, DOCM, nach Anspruch 13 erreicht. Die abhängigen Ansprüche beziehen sich auf vorteilhafte Weiterbildungen der Gegenstände der unabhängigen Ansprüche.

Die vorliegende Erfindung bezieht sich auf ein Focal Plane Array für einen Detektor. Das Focal Plane Array ist ausgebildet, um zwischen einem integrierenden Modus, in dem das Focal Plane Array ausgebildet bzw. eingestellt ist, um Licht über eine Integrationszeit hinweg zu empfangen und nach Ablauf der Integrationszeit in ein elektrisches Signal umzuwandeln, und einem Pulsmodus umzuschalten, in dem das Focal Plane Array ausgebildet bzw. eingestellt ist, um Licht zu empfangen und direkt, also insbesondere nicht erst nach Ablauf der Integrationszeit, in das elektrische Signal umzuwandeln. Das Focal Plane Array kann somit ausgebildet sein, um in dem integrierenden Modus und/oder in dem Pulsmodus betrieben zu werden. Im Pulsmodus werden die empfangenen Lichtpulse direkt in elektrische Signale umgewandelt, sodass deren zeitlicher Verlauf erhalten bleibt.

Das Focal Plane Array kann als Matrix von photosensitiven Einzeldetektoren ausgebildet sein. Insbesondere kann es eine zweidimensionale Anordnung aus Pixeln (Matrix bzw. Pixelmatrix) umfassen. Die Pixel sind jeweils Sensoren für Licht, insbesondere in einem infraroten oder sonstigen Spektralbereich. Das Focal Plane Array ist ausgebildet, um in einer Brennebene einer optischen Baugruppe als flächenhafter Pixelsensor angeordnet zu werden.

Die Pixel können voneinander unabhängige Detektorzonen darstellen. Ein Pixel umfasst in der Regel eine Photodiode. Einzelne Pixel können jeweils eine Ausleseschaltung umfassen, durch welche von der Photodiode bereitgestellte elektrische Ladungsträger als Pixelsignale bereitgestellt werden. Das Focal Plane Array kann eine Ausleseelektronik umfassen, über welche die Pixel bzw. Pixelsignale ausgelesen werden können, um so das elektrische Signal zu erzeugen.

Eine Photodiode eines Pixels ist ausgebildet, um Licht zu empfangen und darauf basierend elektrische Ladungsträger als Grundlage eines Pixelsignals bereitzustellen. Die Ausleseschaltung kann einen Speicher (etwa einen Kondensator) umfassen, der ausgebildet ist, um die elektrischen Ladungsträger bis zu einem Auslesen des Pixels vorzuhalten. Dadurch lassen sich elektrische Ladungsträger über die Zeit sammeln bzw. zu akkumulieren, so dass bei einem Auslesen des Pixels mehr Ladungsträger vorliegen und sich entsprechend ein stärkeres Pixelsignal ergibt. Im integrierenden Modus kann das Focal Plane Array dann ausgebildet sein, um das Pixel erst nach Ablauf der Integrationszeit auszulesen.

Das Pixel kann in seiner Ausleseschaltung einen Schalter umfassen, der den Speicher überbrückt, so dass das Sammeln von elektrischen Ladungsträgern in dem Speicher nicht durchgeführt bzw. die elektrischen Ladungsträger unmittelbar einem Auslesen des Pixels zugeführt werden. Durch das Stellen dieses Schalters kann so auf den Pulsmodus umgeschaltet werden.

Das Focal Plane Array kann somit ausgebildet sein, um einzelne Pixel zwischen dem integrierenden Modus und dem Pulsmodus umzustellen. In Ausführungsbeispielen kann dies auf alle Pixel im Focal Plane Array zutreffen. In anderen Ausführungsbeispielen müssen aber nicht notwendigerweise alle Pixel des Focal Plane Array ausgebildet sein, um jeweils zwischen dem integrierenden Modus und dem Pulsmodus umgestellt werden zu können. Nicht alle Pixel müssen über einen Schalter verfügen, um elektrische Ladungsträger wahlweise einem Speicher oder unmittelbar einem Auslesen zuzuführen. Nicht alle Pixel müssen über einen Speicher für Ladungsträger verfügen.

Optional ist das Focal Plane Array also ausgebildet, um lediglich für eine Untermenge der Pixel zwischen dem integrierenden Modus und dem Pulsmodus umzuschalten. Diese Untermenge kann in Ausführungsbeispielen dadurch bestimmt oder begrenzt sein, dass nicht alle Pixel des Focal Plane Array über einen Schalter zum Umschalten verfügen. Insbesondere kann das Focal Plane Array allerdings auch ausgebildet sein, um aus den Pixeln, die für ein Umschalten zwischen dem integrierenden Modus und dem Pulsmodus ausgebildet sind, ausgebildet sind, einige Pixel zum Umschalten auszuwählen. Das Focal Plane Array kann somit ausgebildet sein, um nur einen Teil seiner Pixel in dem jeweils anderen Modus betreiben zu können.

Optional ist das Focal Plane Array ausgebildet, die Untermenge der Pixel, für die zwischen dem integrierenden Modus und dem Pulsmodus umgeschaltet wird, beliebig bzw. frei in der Matrix zu platzieren. Durch die Anordnung der Pixel entsteht eine Detektorfläche, und das Focal Plane Array kann somit ausgebildet sein, innerhalb dieser Detektorfläche einen auswählbaren Bereich vom integrierenden Modus in den Pulsmodus oder vom Pulsmodus in den integrierenden Modus zu schalten. Die Freiheit, die Untermenge der Pixel zu platzieren, kann im engeren Sinne beliebig sein; das Focal Plane Array kann also ausgebildet sein, um unabhängig für jedes einzelne Pixel ein Umschalten durchzuführen oder nicht durchzuführen. Die Freiheit kann sich allerdings auch auf eine eingeschränkte Anzahl Möglichkeiten beziehen.

Optional ist das Focal Plane Array ausgebildet, um Pixelsignale einer Teilmenge der Pixel zusammenzufassen. Dabei werden Pixelsignale von Pixeln dieser Teilmenge jeweils gemeinsam ausgelesen, so dass die Pixelsignale von Pixeln der Teilmenge wie ein Signal eines einzelnen Pixels behandelt werden können. Das Zusammenfassen der Teilmenge von Pixeln kann einem "Binning" entsprechen. Unter Binning soll das Zusammenfassen mehrerer einzelner Photodioden bzw. Pixel zu einem "Superpixel" verstanden werden. Das Focal Plane Array kann somit ausgebildet sein, um mehrere Pixel zu größeren Superpixeln zusammenfassen zu können. Dies kann entweder in einem Analogteil einzelner Pixel geschehen oder nach einer Digitalisierung der Signale in einer Ausleseelektronik des Focal Plane Array. Ein Binning im Analogteil hat dabei den Vorteil, dass sich die Datenrate der Signale reduziert und zudem eine höhere Empfindlichkeit erreicht werden kann. In Ausführungsbeispielen kann das Focal Plane Array ausgebildet sein, um Pixelsignale aller Pixel des Focal Plane Array zusammenzufassen.

Optional ist das Focal Plane Array jedoch ausgebildet, um die Teilmenge der Pixel, deren Pixelsignale zusammengefasst werden, beliebig bzw. frei in der Matrix zu platzieren. Das Focal Plane Array kann somit ausgebildet sein, um das zusammengefasste Signal zu bestimmen bzw. festzulegen, welche Pixelsignale zusammengefasst werden. Das Focal Plane Array kann somit auch ausgebildet sein, um innerhalb der Detektorfläche einen auswählbaren Bereich zusammenzufassen, bzw. um einen Verbund von Pixeln oder Superpixeln beliebig auf dem Pixelarray zu platzieren. Die Freiheit, die Teilmenge der Pixel zu platzieren, kann im engeren Sinne beliebig sein; das Focal Plane Array kann also ausgebildet sein, um jedes Pixel unabhängig der Teilmenge zuzuordnen oder nicht. Die Freiheit kann sich allerdings auch auf eine eingeschränkte Anzahl Möglichkeiten beziehen.

Die Teilmenge kann alle Pixel des Focal Plane Array oder nur einige Pixel des Focal Plane Array umfassen. Das Focal Plane Array kann ausgebildet sein, um das Zusammenfassen von Pixelsignalen einer Teilmenge von Pixeln unabhängig von dem Umschalten zwischen dem integrierenden Modus und dem Pulsmodus durchzuführen. Das Focal Plane Array kann also ausgebildet sein, um die Teilmenge und die zuvor bezeichnete Untermenge unabhängig voneinander zu bestimmen. Während eines bestimmungsgemäßen Gebrauchs des Focal Plane Array kann es jedoch vorteilhaft sein, die Wahl der Untermenge umgeschalteter Pixel mit der Wahl der Teilmenge zusammengefasster Pixel zu koppeln, und das Focal Plane Array kann ausgebildet sein, um eine solche Kopplung automatisch mit einer Wahl der Untermenge oder einer Wahl der Teilmenge durchzuführen. Insbesondere kann das Focal Plane Array ausgebildet sein, um nach einem Umschalten einer Untermenge von Pixeln etwa in den Pulsmodus eine in Abhängigkeit von dieser Untermenge bestimmte Teilmenge von Pixelsignalen innerhalb dieser Untermenge von Pixeln zusammenzufassen. Die Teilmenge zusammengefasster Pixel kann mit der Untermenge umgeschalteter Pixel zusammenfallen; das Focal Plane Array kann also ausgebildet sein, um alle Pixel der Untermenge bzw. gerade die umgeschalteten Pixel zu einem Superpixel zusammenzufassen.

Das Focal Plane Array ist in der Regel ausgebildet, um wiederholt Licht in ein elektrisches Signal umzuwandeln. Das Umwandeln von Licht in ein elektrisches Signal erfolgt in der Regel wiederholt, indem nach einem vorbestimmten Ablauf elektrische Ladungsträger von Pixel und/oder Gruppen von Pixeln ausgelesen werden. Ein einzelnes Auslesen kann dabei einer Bildaufnahme entsprechen.

Optional ist das Focal Plane Array ausgebildet, um die Teilmenge der Pixel, deren Pixelsignale zusammengefasst werden, zwischen einem ersten elektrischen Signal und einem auf das erste elektrische Signal folgenden zweiten elektrischen Signal zu bestimmen. Das Focal Plane Array kann somit ausgebildet sein, um Position und Größe des Pixel- oder Superpixelverbundes von einer Bildaufnahme zur nächsten zu verändern.

Optional ist das Focal Plane Array ausgebildet, um Licht zu empfangen und bei dem Umwandeln in das elektrische Signal einen Anteil des Lichts mit einer Modulation und/oder einer Einzelpulsdauer unterhalb einer vorbestimmten entsprechenden Grenzfrequenz oder außerhalb eines vorbestimmten entsprechenden Frequenzbands herauszufiltern (d.h. zu ignorieren). Es kann somit ein Anteil des Lichts, der keine Pulse der Pulsdauer kürzer als die inverse Grenzfrequenz umfasst, herausgefiltert werden. Dieses Herausfiltern kann sich insbesondere auf elektrische Ladungsträger beziehen, die durch den Anteil des Lichts unterhalb der Grenzfrequenz bzw. außerhalb des Frequenzbands mit entsprechenden Frequenzen bereitgestellt werden. Das Herausfiltern kann im integrierenden Modus und/oder im Pulsmodus erfolgen. Licht mit einer Modulation oder einer Einzelpulsdauer oberhalb der entsprechenden Grenzfrequenz bzw. innerhalb des entsprechenden Frequenzbands kann dabei insbesondere von einem am Suchkopf reflektierten Laserstrahl stammen. Das Focal Plane Array kann also ausgebildet sein, um insbesondere das reflektierte Licht des Laserstrahls in ein elektrisches Signal umzuwandeln, und dabei Licht von anderen Quellen zu dämpfen. Die Grenzfrequenz bzw. das Frequenzband kann vorteilhafterweise in Abhängigkeit von der Modulation bzw. der Pulsdauer der Laserpulse gewählt werden.

Optional umfasst das Focal Plane Array dazu filternde Pixel, die jeweils einen Filter aufweisen, um basierend auf dem Filter den Anteil des Lichts mit einer Modulation und/oder einer Pulsdauer unterhalb der entsprechenden Grenzfrequenz oder außerhalb eines vorbestimmten entsprechenden Frequenzbands herauszufiltern. In Ausführungsbeispielen umfassen die filternden Pixel dazu jeweils einen geeigneten Hochpass- oder Bandpassfilter, der im Ausleseschaltkreis angeordnet sein kann.

Optional ist das Focal Plane Array ausgebildet, um das Herausfiltern des Anteils des Lichts mit einer Modulation und/oder Pulsdauer unterhalb der entsprechenden Grenzfrequenz oder außerhalb des entsprechenden Frequenzbands ein- und auszuschalten. Dazu kann in den filternden Pixeln beispielsweise jeweils ein Schalter vorgesehen sein, um die elektrischen Ladungen aus der Photodiode dem entsprechenden Hoch- oder Bandpasspassfilter entweder zuzuführen oder nicht zuzuführen.

In Ausführungsbeispielen können alle oder lediglich ein Teil der Pixel des Focal Plane Array als filternde Pixel ausgeführt werden. Es kann insbesondere vorteilhaft sein, alle Pixel des Focal Plane Array, die zwischen dem integrierenden und dem Pulsmodus umschalten können, als filternde Pixel auszuführen.

Optional ist das Focal Plane Array ausgebildet, um filternde Pixel (103) unabhängig voneinander ein- oder auszuschalten. Es kann somit ausgebildet sein, die filternde Funktion beliebig in der Matrix zu platzieren. Es kann vorteilhaft sein, die das Licht filternden Pixel der Teilmenge zusammengefasster Pixel oder der Untermenge umschaltbarer Pixel nachzuführen, bzw. das Schalten der Filter an die entsprechenden Schaltvorgänge für den integrierenden Modus und den Pulsmodus sowie für das Zusammenfassen der Pixel zu koppeln.

Ausführungsbeispiele beziehen sich auch auf ein System für gerichtete Infrarot-Gegenmaßnahmen, DIRCM, das einen Detektor umfasst, der ein Focal Plane Array wie vorangehend beschrieben aufweist, wobei das DIRCM ausgebildet ist, um basierend auf dem Focal Plane Array ein Closed-Loop-Detektieren eines Objekts durchzuführen. Das Closed-Loop-Detektieren bezeichnet hierbei ein Verfahren, in dem ein am Suchkopf reflektierter Laserstrahl ausgewertet, basierend darauf ein Typ des anfliegenden Flugkörpers klassifiziert und damit ein passender Störcode gewählt wird. Dieses Verfahren kann in dem DIRCM basierend auf lediglich dem einen Detektor durchgeführt werden.

Optional ist das DIRCM ausgebildet, um basierend auf dem Focal Plane Array während des Closed-Loop-Detektierens eine Sichtlinie des Closed-Loop-Detektierens mit einer Achse des Laserstrahls zu überlagern. Insbesondere kann ein dem Fachmann als "boresighting" bekanntes Verfahren dieser Art ebenfalls basierend auf lediglich dem einen Detektor ausgeführt werden.

Optional ist das DIRCM ausgebildet, um basierend auf dem Focal Plane Array ein Erfassen und Verfolgen des Objekts durchzuführen und dabei den Anteil des Lichts mit einer Modulation und/oder Pulsdauer unterhalb der vorbestimmten entsprechenden Grenzfrequenz oder außerhalb des vorbestimmten entsprechenden Frequenzbands herauszufiltern oder zu dämpfen.

Ausführungsbeispiele beziehen sich auch auf ein System für gerichtete optische Gegenmaßnahmen, DOCM, das einen Detektor umfasst, der ein Focal Plane Array nach einem der vorhergehenden Ansprüche aufweist, und das ausgebildet ist, um basierend auf dem Focal Plane Array ein Closed-Loop-Detektieren des Objekts in einem Spektralbereich außerhalb des Infraroten durchzuführen. Ein DOCM arbeitet dabei in einem allgemeineren Bereich des elektromagnetischen Spektrums, es kann insbesondere den ultravioletten (UV), sichtbaren (VIS), nahen infraroten (NIR), kurzwelligen infraroten (SWIR) oder langwelligen infraroten (LWIR) Bereich des Lichts nutzen. Die vorangehend beschriebenen Merkmale des DIRCM können ansonsten ebenfalls in dem DOCM umgesetzt werden.

Ausführungsbeispiele beziehen sich auch auf ein Verfahren zu einem Betreiben eines Focal Plane Array der vorangehend beschriebenen Art. Das Verfahren umfasst ein Schalten zwischen dem integrierenden Modus und dem Pulsmodus.

Optional umfasst das Verfahren ein weiteres Schalten, um das Focal Plane Array in einem filternden integrierenden Modus zu betreiben. Unter dem filternden integrierenden Modus soll dabei der integrierende Modus verstanden werden, in dem das vorangehend beschriebene Herausfiltern des Anteils des Lichts mit einer Modulation und/oder Pulsdauer unterhalb der entsprechenden Grenzfrequenz bzw. außerhalb des entsprechenden Frequenzbands eingeschaltet ist. Im filternden integrierenden Modus kann das Focal Plane Array dann als integrierender Pulsdetektor verwendet werden.

Wichtige Aspekte des vorgestellten Focal Plane Array, der Systeme und Verfahren lassen sich auch wie folgt zusammenfassen.

Das vorgestellte Focal Plane Array ist umschaltbar zwischen einem integrierenden Modus und einem Pulsmodus. Es ist daher in der Lage, sowohl die Funktion des Erfassens und Verfolgens mit einem großen Sichtfeld und hoher Ortsauflösung (wie ein herkömmlicher Tracking Sensor) als auch die Funktion der Klassifikation bzw. Closed-Loop-Detektion mit einem kleinen Sichtfeld und hoher Zeitauflösung (wie ein herkömmlicher Closed-Loop-Detektor) bereitzustellen. Der in herkömmlichen Systemen gerichteter infraroter oder optischer Gegenmaßnahmen (DIRCM, DOCM) verwendete Closed-Loop-Detektor sowie der Tracking Sensor können durch einen Detektor mit dem vorgestellten Focal Plane Array ersetzt werden.

Das vorgestellte Focal Plane Array erreicht diese beiden Funktionen durch eine geänderte Auslesung seiner Pixel. Dies kann durch entsprechende readout integrated circuits, ROIC, in der digitalen Verarbeitung von Pixelsignalen, insbesondere jedoch auch durch entsprechende Ausleseschaltkreise der Pixel in der analogen Verarbeitung der elektrischen Ladungsträger unmittelbar nach den Photodioden betreffen.

Das vorgestellte Focal Plane Array findet seine Verwendung insbesondere in den vorgestellten Systemen geführter infraroter oder optischer Gegenmaßnahmen (DIRCM, DOCM). Es kann auch ein bestehendes solches System (mit separatem Tracking Sensor und Closed-Loop-Detektor) durch das vorgestellte Focal Plane Array nachgerüstet bzw. seine Detektoren mit einer entsprechenden Ausleseelektronik bestückt werden, um im Pulsmodus oder im filternden integrierenden Modus betrieben werden zu können.

Insbesondere kann ein bestehender Tracking Sensor modifiziert werden, so dass auf einen Einsatz eines eigenständigen herkömmlichen Closed-Loop-Detektors verzichtet werden kann. Diese Integration der Closed-Loop-Funktion in den Tracking Sensor kann auf unterschiedliche Weisen erfolgen; insbesondere kann die Closed-Loop-Funktion aufgrund von Schaltern für Speicher und Hochpassfilter im Ausleseschaltkreis zumindest einiger Pixel des Focal Plane Array bedarfsgerecht ein- und ausschaltbar sein.

Die Closed-Loop-Funktion kann ausgehend von einem herkömmlichen Tracking Sensor in diesen integriert werden, indem der Ausleseschaltkreis bzw. ROIC des bestehenden Focal Plane Array im Tracking Sensor geeignet angepasst wird. Es kann auch ein herkömmliches Focal Plane Array eines Tracking Sensors durch ein Focal Plane Array der vorgestellten Art ersetzt werden. Der Pulsmodus wird vorteilhafterweise kombiniert mit einem Filter, der ausgebildet ist, um einen Anteil des Lichts mit einer Modulation und/oder Pulsdauer unterhalb einer vorbestimmten Grenzfrequenz bzw. außerhalb eines Frequenzbands herauszufiltern.

Durch einen Filter kann zusätzlich zum integrierenden Auslesen dabei schaltbar ein Pulsdetektionsmodus integriert werden. Dieser kann einerseits ein Betreiben im filternden Pulsmodus umfassen, durch Einsatz des Filters im integrierenden Modus können die Pulssignale aber auch auf integriert werden (filternder integrierender Modus, bzw. integrierender Pulsdetektor). Ein solcher Pulsdetektor kann für eine Detektion der Einzelpulse vorteilhaft sein.

Im ROIC der Pixel kann daher im Betrieb als Pulsdetektor nicht nur das elektrische Signal bzw. Detektorsignal nach außen gegeben werden, sondern im analogen Teil des Pixels über eine Schwellwertbildung bereits eine Signalvorverarbeitung stattfinden, und damit die anfallende Datenmenge deutlich reduziert werden. Im Pulsmodus können die entsprechenden Pixel des modifizierten Tracking Sensor den herkömmlichen Closed-Loop-Detektor ersetzen. Der modifizierte Tracking Sensor kann so ausgeführt sein, dass nur entweder die nicht filternde, integrierende Funktionsweise oder die (integrierende oder nicht-integrierende) Pulsdetektion möglich ist.

In einem nachgerüsteten DIRCM- oder DOCM-System kann auch in einem Closed-Loop-Detektor anstelle eines Einzeldetektors oder einer 4-Quadrantendiode ein Focal Plane Array der vorgestellten Art mit fest installiertem Filter implementiert werden, das im Pulsmodus und im filternden integrierenden Modus betrieben werden kann.

Ist der Filter eingeschaltet, kann das Verfolgen basierend auf dem reflektierten Laserstrahl im Pulsmodus oder im integrierenden Modus erfolgen. Der Flugkörper kann dann basierend auf dem Rückreflex des Flugkörpers über den Laserstrahl getrackt werden. Diese Methode kann auch angewendet werden, wenn der Motor des Flugkörpers ausgebrannt ist. Im Allgemeinen lässt sich der Flugkörper in einem solchen Fall nicht mehr über den Integrationsmodus detektieren. Solange allerdings noch ein Retroreflex des Suchkopfs in einem der filternden Moden erkannt wird, kann das Verfolgen in diesem Modus weiter fortgesetzt werden, und der Bekämpfungsablauf wird nicht abgebrochen.

Je nach Gegebenheit kann somit das Verfolgen des Flugkörpers im Pulsmodus oder im integrierenden Modus durchgeführt werden. Für große Entfernungen empfiehlt sich der integrierende Modus (ohne den Filter), während für den Post-Burnout-Fall der filternde integrierende Modus oder der Pulsmodus in Frage kommen.

In Ausführungsbeispielen kann ein dem DIRCM oder DOCM übergeordnetes Warnsystem ein Laserwarner sein.

In Ausführungsbeispielen kann das DIRCM oder DOCM durch ein anderes (externes) optisches System durch ein Radar-basiertes Warnsystem eingewiesen werden.

In Ausführungsbeispielen kann das DIRCM oder DOCM auch Dazzling als Gegenmaßnahme einsetzen.

In Ausführungsbeispielen kann das DIRCM oder DOCM zur Optikdetektion verwendet werden.

In Ausführungsbeispielen ist das Lasergerät bzw. der (detektierte) Laser nicht Teil des DIRCM- oder DOCM-Systems.

In Ausführungsbeispielen kann das vorgestellte Focal Plane Array in einem Laserwarner verwendet werden.

Insbesondere sind somit für das vorgestellte Focal Plane Array und die vorgestellten Systeme und Verfahren folgende Aspekte von Bedeutung:
Das Focal Plane Array besitzt die Möglichkeit, zwischen einem integrierenden und einem Pulsmodus umschalten zu können. Im Pulsmodus können die empfangenen Lichtpulse direkt in elektrische Signale umgewandelt werden, sodass deren zeitlicher Verlauf erhalten bleibt.

Das Focal Plane Array kann die Möglichkeit besitzen, nur einen Teil seiner Pixel in dem jeweils anderen Modus zu betreiben.

Das Focal Plane Array kann die Möglichkeit besitzen, mehrere Pixel zu größeren "Superpixeln" zusammenfassen zu können.

Das Focal Plane Array kann die Möglichkeit besitzen, einen Verbund von Pixeln oder Superpixeln beliebig auf dem Pixelarray zu platzieren.

Das Focal Plane Array kann die Möglichkeit besitzen, die Position und Größe des Pixel- oder Superpixelverbundes von einer Bildaufnahme zur nächsten zu verändern.

Das DIRCM wird durch den Einsatz des Focal Plane Array um einen Closed-Loop-Kanal erweitert.

Das DIRCM kann die Möglichkeit besitzen, die Sichtlinie der Closed-Loop-Detektion elektronisch zu verändern, um sie mit der Laserachse zu überlagern.

Das DIRCM kann in der Lage sein, die Pixel bzw. Superpixel im Pulsmodus der bei einer integrierenden Pulsdetektion als Trackingsensor für aktives Tracking zu nutzen

Das System kann ein DOCM sein, das die vorangehenden Eigenschaften in anderen Spektralbereichen (UV, VIS, NIR oder SWIR oder LWIR) nutzt.

Das Focal Plane Array und die vorgestellten Systeme bieten unter anderem folgende Vorteile.

Die DIRCM- bzw. DOCM-Systeme weisen im Vergleich zu einem herkömmlichen System einen einfacheren Aufbau auf. Insbesondere lässt sich die Komplexität eines herkömmlichen DIRCM-Systems deutlich reduzieren. So ist beispielsweise das Ausrichten der Sichtlinie des Tracking Sensor und des Closed-Loop-Detektors mit dem Laserstrahl deutlich einfacher, wenn nur ein kombinierter Detektor mit dem vorgestellten Focal Plane Array zum Einsatz kommt. Das Aufteilen des Strahlengangs zwischen Closed-Loop-Detektor und Tracking Sensor kann ebenfalls entfallen. Insbesondere kann zumindest ein Strahlteiler entfallen. Dadurch bleibt eine Intensität des reflektierten Laserstrahls am Detektor höher, und (bei fester Sensitivität) kann somit eine größere Reichweite als in einem herkömmlichen System erreicht werden.

Zudem kann das System insbesondere im (integrierenden oder reinen) Pulsmodus, bzw. in der Closed-Loop-Funktion, eine Sichtlinienausrichtung durch ein Nachführen der Gruppe zusammengefasster Pixel erreichen. Dadurch kann im Vergleich zu einem herkömmlichen System eine Mechanik zur Ausrichtung der Geräte (insbesondere des Richtsystems, des Detektors und/oder des Lasergeräts) entfallen. Diese Möglichkeit der elektronischen Sichtlinienausrichtung kann auch für den Integrationsmodus ausgebildet sein, insbesondere, da die gleiche Optik und die gleichen Photodioden verwendet werden können.

Die hochfrequenten Einzelpulssignale des reflektierten Laserstrahls können bereits innerhalb der Pixel (im Analogteil der Pixel) integriert werden. Dadurch kann sich im Vergleich zu einem herkömmlichen Closed-Loop-Detektor eine deutlich reduzierte Datenrate ergeben. Durch das System kann zudem ein besseres Signal/Hintergrund-Verhältnis erreicht werden.

Der Detektor kann ausgebildet sein, um durch ein Zusammenfassen von Pixeln eine Ortsauflösung insbesondere im Pulsmodus und/oder im filternden integrierenden Modus bzw. der integrierenden Pulsdetektion einzustellen. Die Ortsauflösung kann von derjenigen einer Einzeldiode (in der alle Pixelsignale gemeinsam als Signal eines einzigen Pixels ausgelesen werden: instantanous field of view, IFOV = field of view, FOV) bis hin zur Ortsauflösung eines einzelnen Pixels (Pixelsignale werden für jedes Pixel individuell ausgelesen, IFOV = Pitch / Brennweite) reichen.

Ebenso kann ein Thresholding bereits in den Pixeln bewirkt werden, um die Datenrate weiter zu reduzieren. Insbesondere kann auch ein Tracking oder Verfolgen mit der reduzierten Datenrate erfolgen.

Vorteilhafterweise können die filternden Pixel bzw. Closed-Loop-Photodioden gekühlt werden (kryogene Temperaturen). So kann ein Rauschverhalten optimiert werden. In dem hier vorgestellten System reicht eine Kühlmaschine für einen Detektor mit dem vorgestellten Focal Plane Array aus. Bei herkömmlich getrennten Detektoren sind dazu üblicherweise zwei Kühlmaschinen (eine für den Tracking Sensor und eine für den Closed-Loop-Detektor) notwendig.

Im filternden integrierenden Modus bzw. bei der integrierenden Pulsdetektion kann, verglichen mit einer (nicht-integrierenden) Einzelpulsdetektion, wie sie in einem herkömmlichen Closed-Loop-Detektor verwendet wird, ein besseres Signal/Hintergrund-Verhältnis und ein besseres Signal/Basisstrom-Verhältnis erreicht werden.

Das vorgestellte Focal Plane Array lässt eine Nachrüstung der Closed-Loop-Funktionalitäten (Klassifikation, Entfernungsmessung, Closed Loop Tracking,...) mit dem vorgestellten Focal Plane Array in ein bestehendes Open-Loop-System ohne Veränderungen am optischen Pfad zu.

Einige der Vorteile sind insbesondere auch zu erreichen, wenn der Aufbau dem klassischen Closed Loop DIRCM mit zwei Detektoren entspricht, die Detektoren jedoch mit der entsprechenden Ausleseelektronik bestückt sind und im Pulsmodus oder im filternden integrierenden Modus betrieben werden können. Dies betrifft insbesondere die Integration der Einzelpulssignale bereits im Analogteil des Pixels, die eine deutlich reduzierte Datenrate und ein besseres Signal/Hintergrund-Verhältnis bewirken kann, sowie die durch den Hochpassfilter effektiv bewirkte Schwellenwertbildung (das Thresholding) im filternden Pixel, die wieder eine Reduktion der Datenrate bewirkt.

In einem herkömmlichen System kann zudem anstelle eines Einzeldetektors oder einer 4-Quadrantendiode für den Closed-Loop-Detektor eine Pixelmatrix aus dem hier vorgestellten Detektor eingesetzt werden, die im (reinen) Pulsmodus oder zur integrierenden Pulsdetektion betrieben werden kann. Mit dieser Umrüstung lassen sich bereits insbesondere die vorangehend erwähnte einstellbare Ortsauflösung für den Closed-Loop-Kanal von einer Einzeldiode (IFOV=FOV) bis hin zur Ortsauflösung eines einzelnen Pixels (IFOV = Pitch / Brennweite) sowie eine elektronische Ausrichtung der Sichtlinie des Closed-Loop-Kanals auf die Richtung des Lasers (an Stelle einer mechanischen Nachführung) erreichen.

### KURZBESCHREIBUNG DER FIGUREN

Ausführungsbeispiele der vorliegenden Erfindung werden in der folgenden detaillierten Beschreibung und den beiliegenden Zeichnungen dargestellt, die jedoch nicht so verstanden werden sollen, dass sie die Offenbarung auf die spezifischen Ausführungsformen einschränken, sondern lediglich der Erklärung und dem Verständnis dienen.
- Fig. 1: zeigt ein Ausführungsbeispiel für ein Focal Plane Array gemäß der vorliegenden Erfindung.
- Fig. 2: zeigt für ein Ausführungsbeispiel eine Teilmenge von Pixeln, deren Pixelsignale zusammengefasst werden.
- Fig. 3: zeigt für ein Ausführungsbeispiel vier Teilmengen von Pixeln, deren Pixelsignale zusammengefasst werden.
- Fig. 4: illustriert ein Nachführen durch ein Platzieren von vier Teilmengen von Pixeln, deren Pixelsignale zusammengefasst werden.
- Fig. 5: zeigt ein Ausführungsbeispiel eines Ausleseschaltkreises für ein Pixel des Focal Plane Array.
- Fig. 6: illustriert für einen Verlauf einer Lichtintensität elektrische Signale an einem Pixelausgang in verschiedenen Detektionsmoden.
- Fig. 7: zeigt einen schematischen Aufbau für ein Ausführungsbeispiel eines Systems für gerichtete optische oder Infrarot-Gegenmaßnahmen gemäß der vorliegenden Erfindung.
- Fig. 8: zeigt einen schematischen Aufbau eines herkömmlichen Open-Loop DIRCM (a) und einen schematischen Aufbau eines herkömmlichen Closed-Loop DIRCM (b).
- Fig. 9: zeigt einen Ausleseschaltkreis für ein herkömmliches 3T-Pixel in einem herkömmlichen Focal Plane Array.

### DETAILLIERTE BESCHREIBUNG DER FIGUREN

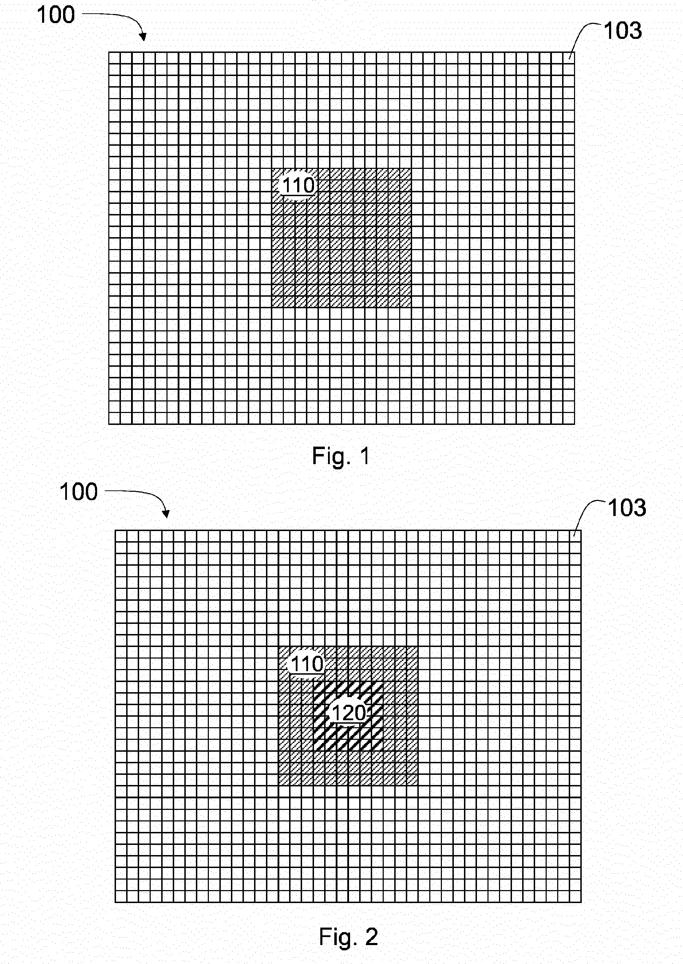

**Fig. 1** zeigt ein Focal Plane Array 100 für einen Detektor, genauer eine Matrix von Pixeln 103 des Focal Plane Array 100. Das Focal Plane Array 100 ist ausgebildet, um umzuschalten zwischen einem integrierenden Modus, in dem das Focal Plane Array 100 ausgebildet ist, um Licht über eine Integrationszeit hinweg zu empfangen und nach Ablauf der Integrationszeit in ein elektrisches Signal umzuwandeln, und einem Pulsmodus, in dem das Focal Plane Array 100 ausgebildet ist, um Licht zu empfangen und direkt, nicht erst nach Ablauf der Integrationszeit, in ein elektrisches Signal umzuwandeln.

Im vorliegenden Ausführungsbeispiel ist das Focal Plane Array 100 ausgebildet, um für eine Untermenge 110 aus der Menge von Pixeln 103 zwischen dem integrierenden Modus und dem Pulsmodus umzuschalten. Das Focal Plane Array 100 kann auch ausgebildet sein, um alle Pixel 103 zwischen dem integrierenden Modus und dem Pulsmodus umzuschalten, und eine beliebige Untermenge zum Umschalten auszuwählen. Dies kann dann die hier dargestellte Untermenge 110 sein. Die Untermenge 110 ist im Zentrum der Pixelmatrix des Focal Plane Array 100 angeordnet. Pixel 103 im Komplement der Untermenge 110 weisen eine Funktionalität eines herkömmlichen Focal Plane Array 100 auf, die für einen Detektor eines DIRCM oder DOCM für das Einfangen des Flugkörpers und das Tracking notwendig ist. Die Pixel 103 der Untermenge 110 sind ebenfalls zu dieser Funktion ausgebildet. Das Focal Plane Array 100 lässt jedoch für die Pixel 103 der Untermenge 110 die Umschaltung zwischen dem integrierenden Modus und dem Pulsmodus bzw. einer AC-Kopplung zu.

Zumindest die Pixel 103 der Untergruppe 110 verfügen vorteilhafterweise über einen Filter, durch den sie ausgebildet sind, um beim Umwandeln von Licht in elektrische Ladungsträger einen Anteil des Lichts mit einer Modulation bzw. Pulsdauer unterhalb einer vorbestimmten entsprechenden Grenzfrequenz oder außerhalb eines vorbestimmten entsprechenden Frequenzbands herauszufiltern. Der Filter kann zuschaltbar ausgeführt sein. Die Pixel 103 der Untermenge 110 können dann wahlweise als Pulsdetektor (im Pulsmodus) oder integrierender Pulsdetektor (im integrierenden Modus mit einem Filter bzw. einem filternden integrierenden Modus) betrieben werden. Werden die Pixel 103 der Untermenge 110 im Pulsmodus als Pulsdetektor verwendet, so wird das AC-gekoppelte Signal (d.h. der Pulsverlauf) direkt nach außen gegeben. Das elektrische Signal kann dort z.B. über eine Laufzeitmessung für eine Entfernungsbestimmung genutzt werden.

**Fig. 2** zeigt ein Focal Plane Array 100 mit einer Menge von Pixeln 103, das ausgebildet ist, um (insbesondere) für eine Untermenge 110 von Pixeln 103 zwischen dem integrierenden Modus und dem Pulsmodus umzuschalten. Die Untermenge ist im Zentrum einer Pixelmatrix des Focal Plane Array 100 angeordnet. Das Focal Plane Array 100 ist zudem ausgebildet, um Pixelsignale (insbesondere) einer Teilmenge 120 von Pixeln 103 zusammenzufassen. Die Teilmenge 120 kann beispielsweise kleiner oder gleich der Untermenge 110 gewählt werden. Hier zeigt die Figur eine Teilmenge 120 von 6x6 Pixeln 103, deren Pixelsignale zusammengefasst werden. Die Teilmenge 120 kann jedoch auch alle Pixel der Untermenge 110 umfassen. Das Zusammenfassen kann einem Binning entsprechen.

Das Focal Plane Array 100 kann allerdings auch außerhalb der Untermenge 110 Pixel 103 eines ersten Typs bzw. einer ersten Bauart aufweisen, die lediglich für den integrierenden Modus ausgebildet sind. In der Untermenge 110 kann das Focal Plane Array 100 Pixel 103 eines zweiten Typs bzw. einer zweiten Bauart aufweisen, die zwischen dem integrierenden Modus und dem Pulsmodus umgeschaltet werden können, und bei denen ein Filter zugeschaltet werden kann.

Zusätzlich zum Umschalten der einzelnen Pixel 103 zwischen dem integrierenden Modus und dem Pulsmodus kann somit eine Auswahl einer Region of Interest und ein Binning erreicht werden. Unter Binning soll das Zusammenfassen mehrerer einzelner Photodioden bzw. Pixel 103 zu einem "Superpixel" verstanden werden. Das Binning kann dabei beispielsweise innerhalb eines Zentralbereiches des Focal Plane Array 100 erfolgen. Beispielsweise kann der gesamte Zentralbereich, insbesondere alle Pixel 103 der Untermenge 110, oder (wie hier dargestellt) nur ein Teil davon zu einer oder mehreren großen Photodioden bzw. Superpixeln zusammengefasst werden.

Das Zusammenfassen kann entweder in einem Analogteil der Pixel 103 der Teilmenge 120 geschehen, oder nach einer Digitalisierung der entsprechenden einzelnen Pixelsignale. Ein Binning im Analogteil hat den Vorteil, dass sich die Datenrate des elektrischen Signals reduziert und zudem eine höhere Empfindlichkeit erreicht werden kann.

Die Untermenge 110 deckt dabei vorteilhafterweise ein Sichtfeld ab, das einem Sichtfeld eines herkömmlichen Closed-Loop-Detektors 40 entspricht. In anderen Ausführungsbeispielen des Focal Plane Array 100 können auch alle Pixel 103 des Focal Plane Array 100 Elemente der Untermenge 110 sein.

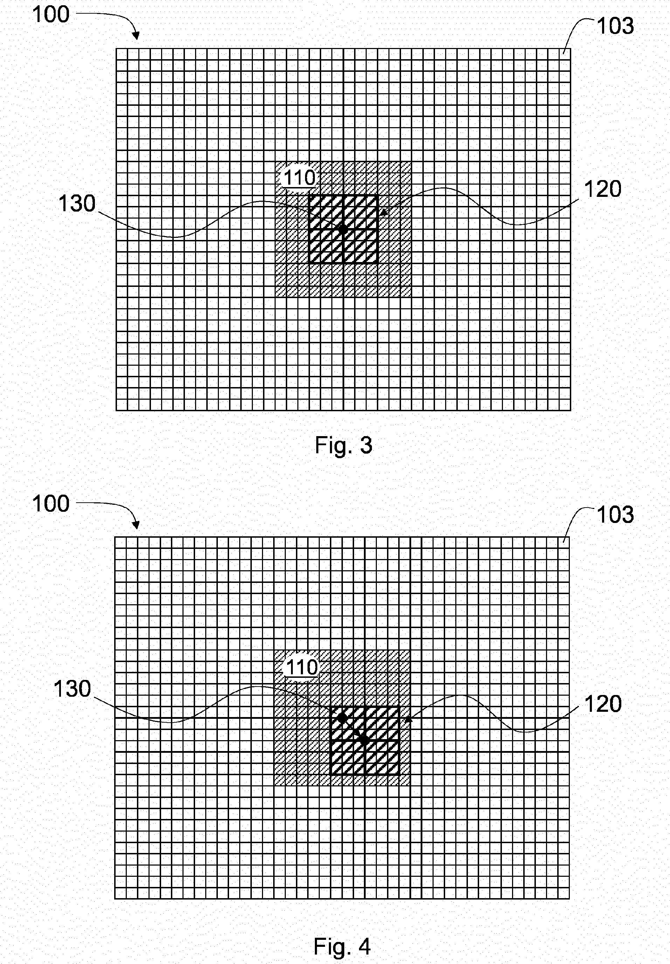

**Fig. 3** zeigt ein Focal Plane Array 100 mit einer Menge von Pixeln 103, wobei das Focal Plane Array 100 ausgebildet ist, um für eine Untermenge 110 von Pixeln 103 zwischen dem integrierenden Modus und dem Pulsmodus umzuschalten. Die Untermenge 110 ist im Zentrum einer Pixelmatrix des Focal Plane Array 100 angeordnet. Die Pixel 103 der Untergruppe 110 können über einen Filter verfügen, durch den sie ausgebildet sind, um bei einem Umwandeln des Lichts in ein elektrisches Signal einen Anteil des Lichts mit einer Modulation und/oder Pulsdauer unterhalb einer vorbestimmten entsprechenden Grenzfrequenz oder außerhalb eines vorbestimmten entsprechenden Frequenzbands herauszufiltern. Das Focal Plane Array 100 ist hier zudem ausgebildet, um Pixelsignale von vier Teilmengen 120 von Pixeln 103 zusammenzufassen. Hier zeigt die Figur vier Teilmengen 120 von jeweils 3×3 Pixeln 103, deren Pixelsignale jeweils zusammengefasst werden. Das Zusammenfassen kann einem Binning entsprechen.

In einem Zentrum des Focal Plane Array 100 bzw. der Pixelmatrix ist durch einen Punkt eine Sichtlinie 130 dargestellt. Die Sichtlinie 130 kann als Position eines Zielobjekts in der Brennebene des Detektors bzw. in dem durch das Focal Plane Array 100 empfangenen Bild angesehen werden.Das Focal Plane Array 100 kann somit ausgebildet sein, um mehrere Teilmengen 120 von Pixeln 103 zusammenzufassen. Auf diese Weise kann etwa je nach Situation eine Vorgabe für eine Ortsauflösung erfüllt werden (z.B. für das Verfolgen, bzw. für ein active tracking). Hier werden Pixel 103 zu vier im Vergleich zu der in Fig. 2 dargestellten Situation kleineren Dioden zusammengefasst. Insbesondere bilden sie hier gemeinsam eine 4-Quadrantendiode.

Durch das Zusammenfassen kann eine Ortsauflösung eingestellt werden. In Ausführungsbeispielen kann das Focal Plane Array 100 ausgebildet sein, um Teilmengen 120 verschiedener Größen auszuwählen und die entsprechenden Pixelsignale zusammenzufassen. So kann etwa eine einzelne 6x6-Pixel-Gruppe unterteilbar sein in die hier gezeigte 4-Quadrantendiode (mit einem instantanous field of view, IFOV = FOV/2) oder in Teilmengen 120 von jeweils 2×2 Pixeln 103, oder es können jeweils die einzelnen Pixel 103 der Untermenge 110 ausgelesen werden (mit deren IFOV = Pixelgröße/Brennweite).

**Fig. 4** illustriert ein Nachführen der Sichtlinie 130 (line of sight, LOS) durch ein Verschieben zusammengefasster Pixelsignale von Teilmengen 120 von Pixeln 103. Das Focal Plane Array 100 ist hier ausgebildet, um insbesondere die Teilmengen 120 der Pixel 103, deren Pixelsignal zusammengefasst werden, beliebig in der Matrix zu platzieren.

Bei einem Einsatz des Focal Plane Array 100 in einem Detektor eines DIRCM müssen optische Achsen des Detektors bzw. der Detektoren und des Laserstrahls zueinander ausgerichtet werden. In herkömmlichen Systemen (vgl. Fig. 8) geschieht dies über eine Anpassung insbesondere der Sichtlinie des Closed-Loop-Detektors 40 durch mechanische Verschiebung von optischen oder elektrooptischen Elementen.

Die Ausrichtung der Sichtlinie 130 des vorgestellten Focal Plane Array 100 stellt sich somit deutlich einfacher dar, als wenn Tracking Sensor 30 und Closed-Loop-Detektor 40 getrennt vorliegen, da hier die Teilmengen 120 der Pixel 103, deren Pixelsignale zusammengefasst werden, auf der Pixelmatrix verschoben werden können. Die Ausrichtung der Sichtlinie 130 erfolgt damit rein elektronisch, ohne auf eine mechanische Ausrichtung von Komponenten angewiesen zu sein. In der Figur ist ein Beispiel dargestellt, wie bei einer notwendigen Sichtlinienverschiebung aus der Mitte heraus nach rechts unten nur die Teilmengen 120 der Pixel, bzw. das Fenster der gebinnten Dioden, entsprechend verschoben werden muss.

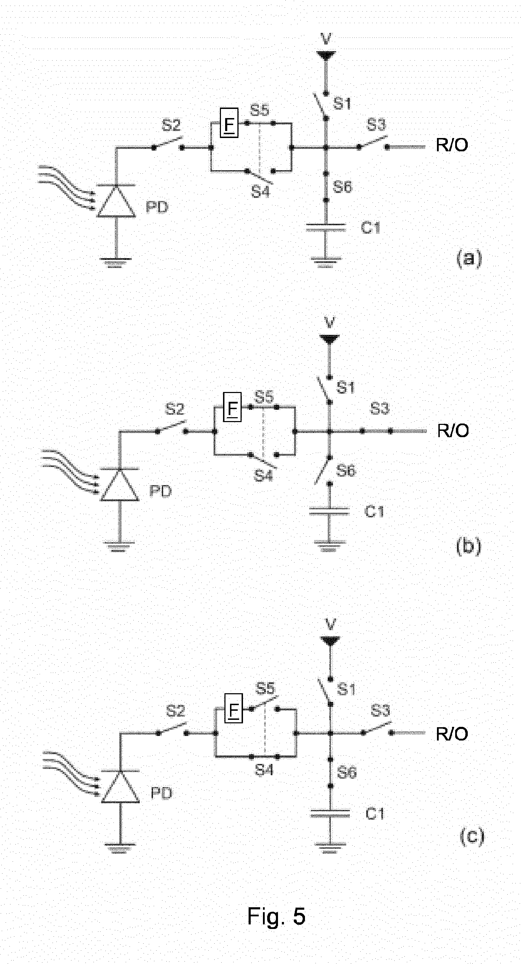

**Fig. 5** zeigt für einen vereinfachten Ausleseschaltkreis eines Pixels 103 in einem Ausführungsbeispiel des vorgestellten Focal Plane Array 100 drei Schaltungen (a), (b), (c). Ausleseschaltkreise von Pixeln 103 der Untermenge 110, wie sie in den Figuren 2 bis 4 im Zentrum des Focal Plane Array 100 dargestellt ist, können einen solchen Aufbau aufweisen. Die Figur zeigt an einem vereinfachten Beispiel eine Pixelschaltung für ein umschaltbares Pixel 103, das zwischen dem integrierenden Modus (Schaltungen (a), (c)) und dem Pulsmodus (Schaltung (b)) umgeschaltet werden kann.

Das Pixel 103 umfasst eine Photodiode PD, die über eine lichtsensitive Oberfläche Licht einfängt und entsprechend einer Lichtintensität elektrische Ladungsträger bereitstellt. Der Ausleseschaltkreis verfügt neben Spannungsquelle V, Kondensator C1 und einer Verbindung R/O zum Auslesen des Pixelsignals über Schalter S1, S2, S3 mit jeweils derselben Funktion wie in einem herkömmlichen 3T-Pixel (vgl. Fig. 9). An der Verbindung R/O zum Auslesen kann sich eine geeignete, insbesondere auch digitalisierende bzw. digitale, Ausleseeinrichtung (read-out integrated circuit, ROIC) anschließen.

Der dargestellte Ausleseschaltkreis weist weiter einen AC-Kopplungs-Schalter S6 sowie einen ersten Filter-Kopplungs-Schalter S4 und einen zweiten Filter-Kopplungs-Schalter S5 auf. Durch den AC-Kopplungs-Schalter S6 lässt sich der Kondensator C1 zuschalten, auf dem eine Integration des Signals bzw. der elektrischen Ladungsträger erfolgt. Ist der AC-Kopplungs-Schalter S6 geöffnet und der Schalter S3 geschlossen, werden die elektrischen Ladungsträger unmittelbar zum Auslesen weitergegeben. Durch die Filter-Kopplungs-Schalter S4, S5 kann ein Filter F zugeschaltet werden. Der Filter F ist ausgebildet, um eine Weitergabe von Ladungsträgern, die durch einen Anteil des Lichts mit einer Modulation und/oder Pulsdauer unterhalb einer vorbestimmten entsprechenden Grenzfrequenz oder außerhalb eines vorbestimmten entsprechenden Frequenzbands durch die Photodiode PD bereitgestellt werden, zu unterdrücken und damit einen Anteil des Lichts mit einer Modulation und/oder Pulsdauer unterhalb der entsprechenden Grenzfrequenz bzw. außerhalb des entsprechenden Frequenzbands herauszufiltern.

Der Filter F sollte so ausgelegt sein, dass die Ladungsträger, die durch die einzelnen Laserpulse bereitgestellt werden, ungedämpft passieren können. Der Filter F kann ein Hochpassfilter oder ein Bandpassfilter sein. Eine Hochpassfilterung könnte beispielsweise über einen in Serie geschalteten Kondensator erfolgen. In diesem Fall kann der Filter F aus einem Kondensator bestehen.

Das Focal Plane Array 100 kann als integrierender Pulsdetektor im filternden integrierenden Modus betrieben werden. In diesem Modus, gezeigt in Schaltung (a), sind die Schalter S5 und S6 geschlossen und die Schalter S4 und S3 geöffnet. Ist der Schalter S2 geschlossen, fließen die Ladungsträger zum Kondensator C1. Nach Beendigung der Belichtungszeit wird der Schalter S3 geschlossen und der im Kondensator C1 gespeicherte Wert ausgelesen. Mit den Schaltern S2 und S1 werden, wie im herkömmlichen 3T-Pixel, die Belichtungszeit bzw. der Reset gesteuert.

Das Focal Plane Array 100 kann als schneller Pulsdetektor im Pulsmodus betrieben werden. Geeignet dazu ist die Schaltung (b). Hier sind die Schalter S5 und S3 geschlossen und die Schalter S6 und S4 geöffnet. Bei Schließen des Schalters S2 wird durch die elektrischen Ladungsträger ein Signal über den Schalter S3 direkt zum Auslesen weitergeleitet. Durch ein Schließen des Schalters S5 und den geöffneten Schalter S4 ist der Filter F zur Unterdrückung langsamer Hintergrundsignale eingeschaltet.

Sind die Schalter S4 und S6 geschlossen und die Schalter S1, S3 und S5 geöffnet, wird die Funktion eines herkömmlichen 3T-Pixel erreicht (vgl. Fig. 9). Dies ist in Schaltung (c) dargestellt. Der Schalter S2 dient zum Starten und Stoppen der Integration.

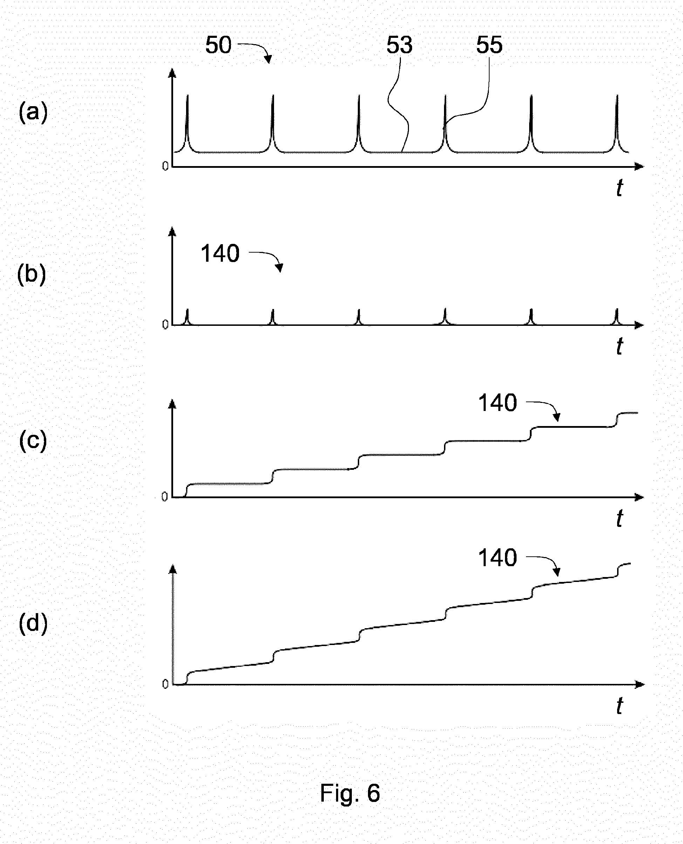

**Fig. 6** illustriert, für einen gegebenen Verlauf einer Lichtintensität 50, entsprechende Pixelsignale 140, die an einem Pixelausgang eines Pixels 103 ausgelesen werden können, das in seinem Ausleseschaltkreis über einen zuschaltbaren Filter F verfügt. Durch den Filter F wird beim Umwandeln des Lichts in die Pixelsignale 140 ein Anteil des Lichts mit einer Modulation und/oder Pulsdauer unterhalb einer vorbestimmten entsprechenden Grenzfrequenz oder außerhalb eines vorbestimmten entsprechenden Frequenzbands herausgefiltert. Die Figur umfasst vier Diagramme (a) bis (d), deren jeweilige horizontale Achse die Zeit t darstellt.

In einem ersten Diagramm (a) ist eine Lichtintensität 50 von mit dem Focal Plane Array 100 empfangenem Licht in einem zeitlichen Verlauf dargestellt. Die Lichtintensität 50 umfasst einen Hintergrundanteil 53, der auf natürliche Weise aus einer Umgebung zum Focal Plane Array 100 gelangt. Weiter umfasst die Lichtintensität 50 periodisch auftretende Pulse 55 aus einem dem Focal Plane Array 100 zugeführten, von einem Zielobjekt reflektierten gepulsten und/oder modulierten Laserstrahl 15.

Ein zweites Diagramm (b) zeigt das Pixelsignal 140, das bei eingeschaltetem Filter F im Pulsmodus am Pixelausgang erzeugt wird. Aufgrund des eingeschalteten Filters F umfasst das Pixelsignal 140 lediglich Information über einen Anteil des Lichts mit einer Modulation und/oder Pulsdauer oberhalb einer vorbestimmten entsprechenden Grenzfrequenz oder außerhalb eines vorbestimmten entsprechenden Frequenzbands. Im Pulsmodus wird das Pixelsignal 140 umgehend (ohne eine Akkumulation von Ladungsträgern über die Integrationszeit hinweg) ausgegeben. Das Pixelsignal 140 gibt dann die periodischen Pulse 55 in der Lichtintensität 50 wieder. Der Pulsmodus kann beispielsweise über eine Laufzeitmessung zum Bestimmen einer Entfernung des Zielobjekts genutzt werden.

Ein drittes Diagramm (c) zeigt das Pixelsignal 140, das bei eingeschaltetem Filter F am Pixelausgang des im integrierenden Modus arbeitenden Pixels 103 erzeugt wird. Dazu können in einem Ausleseschaltkreis des Pixels 103 der Filter F wie auch ein Speicher C1 von Ladungsträgern zugeschaltet sein. Die durch die Pulse des (reflektierten) Laserstrahls 13, 15 in einer Photodiode PD des Pixels 103 erzeugten elektrischen Ladungen werden, wenn durch einen Anteil des Lichts mit einer Modulation und/oder Pulsdauer oberhalb einer vorbestimmten entsprechenden Grenzfrequenz oder außerhalb eines vorbestimmten entsprechenden Frequenzbands bereitgestellt worden sind, akkumuliert und vorgehalten. Das Pixelsignal 140 verstärkt sich daher mit der Zeit. In diesem filternden integrierenden Modus können insbesondere Informationen über das Zielobjekt gesammelt werden, auch, wenn die Intensität des reflektierten Laserstrahls 15 schwach ist. Das Pixelsignal 140 enthält kaum Anteile des Hintergrunds 53, sondern weiterhin vornehmlich Information aus dem reflektierten Laserstrahl 15 (bzw. aus den Pulsen 55). Durch den filternden integrierenden Modus kann somit ein Signal-zu-Hintergrund-Verhältnis reduziert werden, indem mehrere Pulse 55 auf dem Speicher C1 gespeichert werden. Die Auflösung einzelner Pulse 55 ist dann nicht mehr möglich, jedoch kann die Empfindlichkeit gesteigert werden. Vorteilhafterweise erfolgt das Auslesen des Speichers C1 mit einer Wiederholrate, welche die zur Weiterverarbeitung notwendige zeitliche Auflösung des zurückreflektierten Lasersignals 15 gewährleistet.

Ein viertes Diagramm (d) zeigt das Pixelsignal 140, das bei ausgeschaltetem Filter F am Pixelausgang des im integrierenden Modus arbeitenden Pixels 103 erzeugt wird. Die durch die gesamte Lichtintensität 50 bewirkten elektrischen Ladungen werden akkumuliert und vorgehalten. Das Pixelsignal 140 am Pixelausgang verstärkt sich daher mit der Zeit. Im integrierenden Modus kann insbesondere das Erfassen und Verfolgen des Zielobjekts durchgeführt werden. Der integrierende Modus entspricht der Arbeitsweise eines Pixels in einem herkömmlichen Tracking Sensor 30 mit 3T-Pixeln.

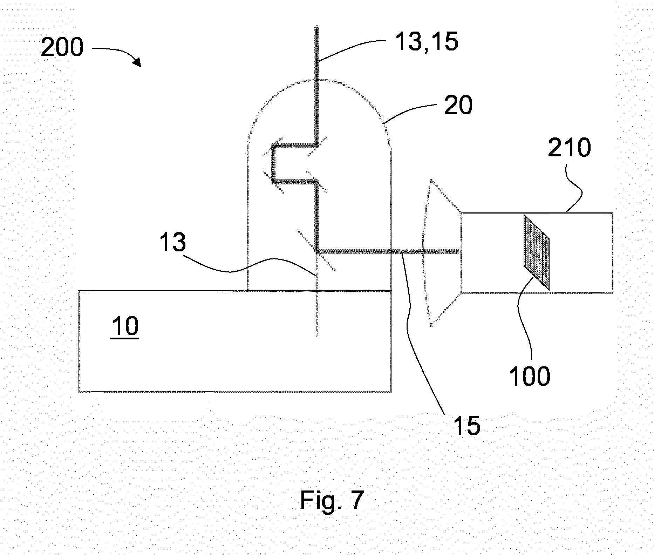

**Fig. 7** zeigt einen schematischen Aufbau eines Systems 200 für gerichtete Infrarot- oder optische Gegenmaßnahmen (DIRCM oder DOCM). Das System 200 umfasst ein Lasergerät 10 zur Erzeugung eines Laserstrahls 13, ein Richtsystem 20 zur Ausrichtung des Laserstrahls 13 auf ein Zielobjekt und einen Detektor 210, der ein Focal Plane Array 100 der vorgestellten Art aufweist. Das Richtsystem 20 ist ausgebildet, um nach einer Reflektion des Laserstrahls 13 an dem Zielobjekt den reflektierten Laserstrahl 15 dem Detektor 210 zuzuführen. Das System 200 ist ausgebildet, um basierend auf dem Focal Plane Array 100 sowohl ein Erfassen und Verfolgen (tracking) als auch ein Closed-Loop-Detektieren bzw. Klassifizieren des Zielobjekts durchzuführen. Das Closed-Loop-Detektieren bezeichnet hierbei ein Verfahren, in dem der gepulste, ggf. modulierte und am Zielobjekt reflektierte Laserstrahl 15 ausgewertet, basierend darauf ein Typ des anfliegenden Zielobjekts klassifiziert und anschließend ein passender Störcode ausgesendet wird.

Zu diesem Zweck ist das System 200 ausgebildet, um das Focal Plane Array 100 im Pulsmodus und im integrierenden Modus zu betreiben, und um zwischen diesen Moden umzuschalten.

Das System 200 ist ausgebildet, um während des Erfassens und Verfolgens des Zielobjekts den integrierenden Modus ohne Filter F zu verwenden, um so eine Funktionalität wie ein herkömmlicher Tracking Sensor bereitzustellen.

Das System 200 ist ausgebildet, um das Closed-Loop-Detektieren insbesondere im Pulsmodus durchzuführen. Dazu ist das System 200 ausgebildet, um durch ein Schalten des Focal Plane Array 100 bei der Umwandlung von Licht in elektrische Signale einen Anteil des Lichts mit einer Modulation und/oder Pulsdauer unterhalb einer vorbestimmten entsprechenden Grenzfrequenz oder außerhalb eines vorbestimmten entsprechenden Frequenzbands herauszufiltern. Dieses Herausfiltern kann im Pulsmodus eingesetzt werden, um die Closed-Loop-Funktion bereitzustellen. Der Filter F ist dann im Pulsmodus eingeschaltet.

Das System 200 kann ausgebildet sein, um auch im integrierenden Modus den Filter F einzusetzen (filternder integrierender Modus). So kann insbesondere eine Datenmenge reduziert werden.

Das System 200 kann zudem ausgebildet sein, um während des Closed-Loop-Detektierens bzw. während der Klassifikation des Zielobjekts eine Verfolgungsfunktion bereitzustellen, indem bei eingeschaltetem Filter F auf den Rückreflex des Zielobjekts getrackt wird. Das System 200 kann ausgebildet sein, um diese Verfolgungsfunktion im (vorteilhafterweise filternden) Pulsmodus oder im filternden integrierenden Modus auch dann anzuwenden, wenn der Laserstrahl 13 bereits auf das Zielobjekt ausgerichtet ist, das Zielobjekt aber kaum noch vor dem Hintergrund 53 detektierbar ist. Dies kann etwa der Fall sein, wenn das Zielobjekt ein Flugkörper mit einem Motor ist, und der Motor des Flugkörpers ausgebrannt ist. Im Allgemeinen lässt sich der Flugkörper dann nicht mehr über den nicht-filternden integrierenden Modus detektieren. Solange allerdings noch ein Retroreflex des Flugkörpers im Pulsmodus oder im filternden integrierenden Modus erkannt wird, kann das Verfolgen bzw. Tracking in dem entsprechenden Modus weiter fortgesetzt werden, und der Bekämpfungsablauf muss nicht abgebrochen werden. Je nach Gegebenheit kann somit das Tracking des Zielobjekts insbesondere im integrierenden Modus wahlweise mit oder ohne Filter F durchgeführt werden. Für große Entfernungen hat sich der integrierende Modus ohne Filter als vorteilhaft erwiesen, während für den Post-Burnout-Fall der filternde integrierende Modus geeigneter ist.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Lasergerät
- 13: Laserstrahl
- 15: reflektierter Laserstrahl
- 20: Richtsystem
- 30: Tracking Sensor
- 40: Closed-Loop-Detektor
- 50: Lichtintensität
- 53: Hintergrund
- 55: Puls
- 100: Focal Plane Array
- 103: Pixel
- 110: Untermenge von Pixeln
- 120: Teilmenge von Pixeln
- 130: Sichtlinie
- 140: Pixelsignal
- 200: System für geführte Infrarot-Gegenmaßnahmen (DIRCM)
- 210: Detektor
- C1: Kondensator
- F: Filter
- PD: Photodiode
- R/O: Verbindung zum Auslesen von Pixelsignalen
- S1, S2, S3, S4, S5, S6: Schalter
- V: Spannungsquelle

## Patentansprüche

1. Ein Focal Plane Array (100) für einen Detektor (210), wobei das Focal Plane Array (100) ausgebildet ist, um umzuschalten zwischen
einem integrierenden Modus, in dem das Focal Plane Array (100) ausgebildet ist, um Licht über eine Integrationszeit hinweg zu empfangen und nach Ablauf der Integrationszeit in ein elektrisches Signal umzuwandeln, und
einem Pulsmodus, in dem das Focal Plane Array ausgebildet ist, um Licht zu empfangen und direkt, nicht erst nach Ablauf der Integrationszeit, in ein elektrisches Signal umzuwandeln.

2. Das Focal Plane Array (100) nach Anspruch 1, wobei das Focal Plane Array (100) eine Menge von Pixeln (103) aufweist, um Licht zu empfangen, und wobei das Focal Plane Array (100) ausgebildet ist, um für eine Untermenge (110) aus der Menge von Pixeln (103) zwischen dem integrierenden Modus und dem Pulsmodus umzuschalten.

3. Das Focal Plane Array (100) nach Anspruch 2, wobei die Pixel (103) in einer Matrix angeordnet sind und das Focal Plane Array (100) ausgebildet ist, die Untermenge (110) der Pixel (103), für die zwischen dem integrierenden Modus und dem Pulsmodus umgeschaltet wird, beliebig in der Matrix zu platzieren.

4. Das Focal Plane Array (100) nach einem der vorangehenden Ansprüche, wobei das Focal Plane Array (100) eine Menge von Pixeln (103) aufweist, die ausgebildet sind, um Licht zu empfangen und basierend darauf jeweils ein Pixelsignal (140) bereitzustellen, und wobei im integrierenden Modus und im Pulsmodus das jeweilige elektrische Signal auf den Pixelsignalen (140) basiert und das Focal Plane Array (100) ausgebildet ist, um Pixelsignale (140) einer Teilmenge (120) der Pixel (103) zusammenzufassen.

5. Das Focal Plane Array (100) nach Anspruch 4, wobei die Pixel (103) in einer Matrix angeordnet sind und das Focal Plane Array (100) ausgebildet ist, die Teilmenge (120) der Pixel (103), deren Pixelsignale (140) zusammengefasst werden, beliebig in der Matrix zu platzieren.

6. Das Focal Plane Array (100) nach Anspruch 4 oder Anspruch 5, wobei das Focal Plane Array (100) ausgebildet ist, um wiederholt Licht in ein elektrisches Signal umzuwandeln, und um die Teilmenge (120) der Pixel (103), deren Pixelsignale (140) zusammengefasst werden, zwischen einem ersten elektrischen Signal und einem auf das erste elektrische Signal folgenden zweiten elektrischen Signal zu bestimmen.

7. Das Focal Plane Array (100) nach einem der vorhergehenden Ansprüche, wobei das Focal Plane Array (100) ausgebildet ist, um bei dem Umwandeln in das elektrische Signal einen Anteil des Lichts mit einer Modulation und/oder Pulsdauer unterhalb einer vorbestimmten entsprechenden Grenzfrequenz oder außerhalb eines vorbestimmten entsprechenden Frequenzbands herauszufiltern.

8. Das Focal Plane Array (100) nach Anspruch 7, wobei das Focal Plane Array (100) filternde Pixel (103) umfasst, wobei die filternden Pixel (103) jeweils einen Filter (F) aufweisen, um basierend auf dem Filter (F) den Anteil herauszufiltern.

9. Das Focal Plane Array (100) nach Anspruch 8, wobei das Focal Plane Array (100) ausgebildet ist, um ein Herausfiltern des Anteils ein- und auszuschalten.

10. Das Focal Plane Array (100) nach Anspruch 9, wobei die Pixel (103) in einer Matrix angeordnet sind und das Focal Plane Array (100) ausgebildet ist, um die filternden Pixel (103) unabhängig voneinander ein- oder auszuschalten und so eine filternde Funktion beliebig in der Matrix zu platzieren.

11. Ein System (200) für gerichtete Infrarot-Gegenmaßnahmen, DIRCM, das einen Detektor (210) umfasst, der ein Focal Plane Array (100) nach einem der vorhergehenden Ansprüche aufweist, wobei das System (200) ausgebildet ist, um basierend auf dem Focal Plane Array (100) ein Closed-Loop-Detektieren eines Zielobjekts durchzuführen.

12. Das System (200) nach Anspruch 11, soweit zurückbezogen auf einen der Ansprüche 4 bis 10, wobei das Closed-Loop-Detektieren des Zielobjekts auf einem Laserstrahl (13, 15) basiert, und wobei das System (200) ausgebildet ist, um basierend auf dem Focal Plane Array (100) während des Closed-Loop-Detektierens eine Sichtlinie (130) des Closed-Loop-Detektierens mit einer Achse des Laserstrahls (13, 15) zu überlagern.

13. Das System (200) nach Anspruch 11 oder Anspruch 12, soweit zurückbezogen auf einen der Ansprüch 7 bis 10, wobei das System (200) ausgebildet ist, um basierend auf dem Focal Plane Array (100) ein Erfassen und Verfolgen des Zielobjekts durchzuführen und bei dem Umwandeln in das elektrische Signal einen Anteil des Lichts mit einer Modulation und/oder Pulsdauer unterhalb einer vorbestimmten entsprechenden Grenzfrequenz oder außerhalb eines vorbestimmten entsprechenden Frequenzbands herauszufiltern.

14. Ein System für gerichtete optische Gegenmaßnahmen, DOCM, das einen Detektor umfasst, der ein Focal Plane Array (100) nach einem der vorhergehenden Ansprüche aufweist, und das ausgebildet ist, um basierend auf dem Focal Plane Array (100) ein Closed-Loop-Detektieren eines Zielobjekts in einem Spektralbereich außerhalb des Infraroten durchzuführen.

15. Ein Verfahren zu einem Betreiben eines Focal Plane Array nach einem der Ansprüche 1 bis 10, das Verfahren umfasst:
Schalten zwischen dem integrierenden Modus und dem Pulsmodus.
